# EUROPÄISCHE PATENTSCHRIFT

(11) **EP 2 274 103 B1**
(45) Veröffentlichungstag und Bekanntmachung des Hinweises auf die Patenterteilung: **01.08.2018**
(21) Anmeldenummer: 09726667.0
(22) Anmeldetag: 10.03.2009
(51) Int. Cl.: B03B 9/06, B29B 17/02, C22B 7/00, B29K 21/00, B29K 23/00, B29K 27/06, B29K 711/14

(54) **VERFAHREN UND ANLAGE ZUR AUFBEREITUNG EINER SCHWEREN, KUNSTSTOFFREICHEN FRAKTION**
METHOD AND SYSTEM FOR PREPARING A HEAVY, PLASTIC-RICH FRACTION
PROCÉDÉ ET INSTALLATION POUR PRÉPARER UNE FRACTION LOURDE RICHE EN MATIÈRES PLASTIQUES

(30) Priorität: 31.03.2008 DE 102008016417; 20.02.2009 DE 102009009873
(43) Veröffentlichungstag der Anmeldung: 19.01.2011
(73) Patentinhaber: Volkswagen Aktiengesellschaft, 38440 Wolfsburg (DE); SiCon GmbH, 57271 Hilchenbach (DE)
(72) Erfinder: KNUST, Michael, 38550 Isenbüttel (DE); DEN DUNNEN, Bram, 38124 Braunschweig (DE); GUSCHALL, Heiner, 57271 Hilchenbach (DE); GOLDMAN, Daniel, 38640 Goslar (DE)
(86) Internationale Anmeldenummer: PCT/EP2009/001699
(87) Internationale Veröffentlichungsnummer: WO 2009/121466

(56) Entgegenhaltungen:
- EP-A1- 0 623 390
- EP-A1- 1 020 225
- EP-B1- 1 332 001
- DE-A1- 10 334 646

## Beschreibung

Die Erfindung betrifft ein Verfahren und eine Anlage zur Veredlung einer Schwerfraktion, die während der Aufbereitung von metallarmen, kunststoffreichen Stoffgemischen erzeugt wurde, insbesondere einer kunststoffreichen Schwerfraktion mit einem mittleren Schüttgutgewicht von > 0,3 t/m³.

Ein Verfahren zur Aufbereitung von Shredder-Rückständen ist beispielsweise aus der europäischen Patentschrift EP 1 332 001 B1 bekannt. Bei dem hier beschriebenen Verfahren erfolgen zunächst in separaten Vorprozessen eine Aufbereitung einer Shredder-Leichtfraktion und eine Aufbereitung einer Shredder-Schwerfraktion. Während des Vorprozesses der Aufbereitung der Shredder-Leichtfraktion erfolgt nach Abtrennung einer Schaumstoff-Fraktion eine Zerkleinerung der verbleibenden Fraktion in einen Austrag < 50 mm. Von der zerkleinerten Fraktion wird eine ferromagnetische Fraktion abgetrennt. Die verbleibende nichtferromagnetische Fraktion wird einem zweiten Zerkleinerungsprozess zugeführt, in dem ein weiterer Aufschluss des Materials erfolgt. Von dem gut aufgeschlossenen Material wird in einem nachgeschalteten Verfahrensschritt eine Sandfraktion < 4 mm abgetrennt. Die verbleibende Fraktion wird einer Windsichtung und einer Dichtetrennung unterzogen und so die Fraktion in eine leichte Fraktion aus Flusen und eine schwere Fraktion getrennt. Die Shredder-Schwerfraktion wird einer Separation der ferromagnetischen Bestandteile unterzogen. Es folgt eine Klassierung des Reststromes und eine Abscheidung von nichteisenhaltigen Metallfraktionen. Dies kann derart erfolgen, dass zunächst eine Klassierung in Fraktionen größer und kleiner 20 mm erfolgt und diese Fraktionen separat dem Metallabscheider zugeführt werden. Im Vordergrund steht dabei eine möglichst saubere stoffliche Trennung in eine nichteisenhaltige Metallfraktion und eine verbleibende metallarme Fraktion. In einer nachfolgenden Klassierung erfolgt die Abscheidung einer Sandfraktion mit einem Korndurchmesser kleiner 6 mm. Die verbleibende grobkörnige metallarme Fraktion wird anschließend in eine schwere Fraktion sowie eine hochdichte Restfraktion aufgetrennt. In dem sich anschließenden Hauptprozess werden die schweren Fraktionen (Rohgranulat) aus den beiden Vorprozessen zusammengefasst. Die zusammengeführten Fraktionen werden zunächst in einem weiteren Zerkleinerungsschritt aufgeschlossen. Nach der Zerkleinerung erfolgen eine Dichtetrennung und die Abtrennung einer Fraktion aus vorwiegend Kunststoff in granulierter Form. Das vorliegende Rohgranulat wird danach in einem zusätzlichen Veredlungsprozess weiter aufgearbeitet. Im Veredlungsprozess erfolgt zunächst eine Oberflächenreinigung mit Wasser in einem Attritionsprozess. Hierbei werden schwermetallhaltige, oberflächlich anhaftende Stäube abgewaschen und in einer Schlamm-Fraktion konzentriert. Anschließend erfolgt eine Trocknung des gewaschenen Granulats. Nach diesem Behandlungsschritt kann optional ein Allmetallseparator vorgesehen sein, mit dem noch letzte, im Granulat enthaltene Metallpartikel, zum Beispiel Kupfer-Litzen, abgetrennt werden können. Das so vorbehandelte Granulat wird einer Aufladung der Granalien durch Reibung unterzogen, wodurch eine PVC-Abtrennung möglich ist und eine chlor- und metallarme Granulat-Fraktion, die der rohstofflichen Verwertung zugeführt werden kann, erhalten wird.

Die EP 1 020 225 A1 beschreibt ein Verfahren zur Separation von organischen Stoffgruppen aus Autoshredder-Leichtfraktionen. Die Autoshredder-Leichtfraktion wird zu Erzielung der erforderlichen Trennfähigkeit zunächst einer Fe-Metallabscheidung unterzogen, um restliche Fe-Metallteile abzuscheiden. Anschließend wird das von wesentlichen Fe-Metallteilen befreite Material einer Zerkleinerung durch eine Schneidmühle zugeführt und auf eine einheitliche Maximal-Korngröße verarbeitet. Nach Abtrennung der flugfähigen, leichten Organikfraktion durch Sichtung erfolgt eine Mehrfachsiebung in 3 Fraktionen, wobei die Siebfraktionen jeweils separat einer weiteren Bearbeitung (Fe-/NE-Metallabscheidung, Dichtetrennung) unterzogen werden.
Die Mehrfachsiebung erfolgt dabei durch ein Doppeldeck (zwei Sieblagen).

In der DE 103 34 646 A1 sind ein Verfahren und eine Anlage zur Aufbereitung einer Leichtfraktion aus der Zerkleinerung von Schrotten und metallhaltigen Abfällen (Autoshredder) beschrieben. Hierbei wird die Leichtfraktion über einen Kastenbeschicker nach Auslese von Metall-Schwerteilen einer Prallmühle zur Zerkleinerung zugeführt und anschließend einer Siebklassierung (Spannwellen-Siebmaschine) zu Fraktionen <20mm (Feingut) und >20mm (Grobgut) unterzogen. Die spröden, mineralischen Komponenten der Leichtfraktion (z.B. Glas, Keramik, Sand) gelangen durch die Prallbeanspruchung vollständig in das Feingut, während die durch die Prallbeanspruchung unzerkleinerbaren Bestandteile (z.B. Kunststoff, Gummi, Metalle) in das Grobgut gelangen. Die durch die Siebklassierung erhaltenen Fraktionen werden anschließend getrennt einer weiteren Aufarbeitung durch Zick-Zack-Sichter und Aeroherden unterzogen.

Aus der EP 0 623 390 A1 sind ein Verfahren und eine Anlage zur mechanischen Aufbereitung von Elektrogeräte-Schrott bekannt. Hierbei sind zunächst Vorbehandlungsstufen vorgesehen, in denen das Abfallgemisch wiederholt zerkleinert und sortiert wird. Die Zerkleinerung und Sortierung erfolgt dabei über Hammermühlen bzw. Magnet- und Wirbelstromabscheider. Nach den Vorbehandlungsstufen ist eine Klassiervorrichtung in Form eines Siebes vorgesehen, deren Feingutaustrag (0,5 - 2,8mm) mit einem Schwingherd und dessen Grobgutaustrag (4,5 - 6,2 mm) mit einer Nasssetzmaschine verbunden ist.

Die Aufgabe der Erfindung ist es, ein Verfahren und eine Anlage zur Verfügung zu stellen, mit denen eine metallarme Schwerfraktion, die während der Aufbereitung von metallarmen, kunststoffreichen Stoffgemischen erzeugt wurde, derart veredelt werden kann, dass ein hochreines Endprodukt zur stofflichen Verwertung erhalten wird.

Erfindungsgemäß wird die Aufgabe mit den Merkmalen der unabhängigen Patentansprüche 1 und 29 gelöst. Vorteilhafte Aus- und Weiterbildungen sind in den Unteransprüchen wiedergegeben.

Gemäß dem erfinderischen Verfahren zur Aufbereitung einer schweren, kunststoffreichen Fraktion (Rohgranulat), welches bei der Aufbereitung von metallarmen kunststoffreichen Stoffgemischen im wesentlichen durch die Abtrennung einer leichten Kunststofffraktion (Rohflusen) entstanden ist, werden nacheinander zumindest folgende Verfahrensschritte durchgeführt:
- Abtrennen von noch vorhandenen Metallteilen, insbesondere solchen Metallteilen, die während der Aufbereitung der metallarmen, kunststoffreichen Stoffgemischen aufgeschlossen wurden,
- Zerkleinern der nach der Metallabtrennung verbleibenden metallreduzierten schweren kunststoffreichen Fraktion,
- Auftrennen der nach der Metallabtrennung verbleibenden metallreduzierten schweren kunststoffreichen Fraktion in mehrere, insbesondere drei kunststoffreiche Fraktion unterschiedlicher Korngröße
- Aufbereiten der separierten kunststoffreichen Fraktionen in zumindest teilweise getrennten Prozessschritten.

Durch das Auftrennen der schweren kunststoffreichen Fraktion in mehrere kunststoffreiche Fraktionen unterschiedlicher Korngröße und deren getrennte Aufbereitung wird eine wesentliche Voraussetzung dafür geschaffen, um am Ende des Prozesses hochreine Endfraktionen zu erhalten, wodurch wiederum eine verbesserte stoffliche Verwertung möglich ist.

Eine besonders vorteilhafte Weiterbildung der Erfindung sieht vor, dass die Aufbereitung der separierten kunststoffreichen Fraktionen zumindest teilweise in gleichartigen Prozessen abläuft, wodurch eine verbesserte Prozesssteuerung möglich ist.

Nach einer Weiterbildung der Erfindung erfolgt die Auftrennung der verbleibenden kunststoffreichen Fraktion in eine erste kunststoffreiche Fraktion mit einer Korngröße im Bereich von etwa 0 bis 1,7 mm, vorzugsweise mit einer Korngröße im Bereich von etwa 0 bis 1,5 mm, eine zweite kunststoffreiche Fraktion mit einer Korngröße von etwa 1,3 mm bis 4,2 mm, vorzugsweise im Bereich von etwa 1,5 mm bis 4,0 mm und eine dritte kunststoffreiche Fraktion mit einer Korngröße von etwa 3,8 mm bis 7,2 mm, vorzugsweise mit einer Korngröße von etwa 4,0 bis 7,0 mm.
Eine Auftrennung der verbleibenden kunststoffreichen Fraktion in drei kunststoffreiche Fraktionen unterschiedlicher Korngröße ist nicht zwingend notwendig. Es kann beispielsweise auch in zwei oder auch in vier kunststoffreiche Fraktionen mit natürlich dann etwas anderen Korngrößenbereichen aufgetrennt werden. Allerdings hat sich eine Auftrennung in drei kunststoffreiche Fraktionen (wie oben erwähnt) als sehr vorteilhaft erwiesen.

Gemäß der Erfindung weist die aufzubereitende schwere kunststoffreiche Fraktion im Mittel ein Schüttgutgewicht > 0,2 t/m³, insbesondere ein Schüttgutgewicht deutlich über 0,4 t/m³ auf.

Eine vorteilhafte Ausbildung der Erfindung sieht vor, dass das Abtrennen der Metallteile in zwei unterschiedlichen Prozessschritten erfolgt. Im ersten Prozessschritt werden die ferromagnetischen Bestandteile der metallarmen kunststoffreiche Fraktion abgetrennt und im zweiten Prozessschritt die nichtferromagnetischen Metallteile. Dadurch wird eine sortenreinere Abtrennung ermöglicht, die wiederum eine verbesserte rohstoffliche Verwertung der einzelnen Metalle gewährleistet.

Als Verfahren für die Abtrennung der nicht ferromagnetischen Metallteile sind gemäß der Erfindung eine Wirbelstromabscheidung einsetzbar als auch Verfahren der sensitiven Metallabtrennung auf Basis der elektrischen Leitfähigkeit der nichtferromagnetischen Metallteile. Letzteres Verfahren hat den Vorteil, dass neben aufgeschlossenen ferromagnetischen Metallteilen auch Edelstahl, Blei sowie nichtaufgeschlossene Metalle abtrennbar sind. Außerdem sind die einzelnen Metalle getrennt voneinander separierbar und somit einfacher einer stofflichen Verwertung zuführbar.

Nach einer Ausführung der Erfindung kann vorgesehen sein, dass nach dem Abtrennen der Metallteile als Prozessschritt ein Separieren von chlorreichen Polyvinylchlorid (PVC), vorzugsweise über die unterschiedliche Absorptionsfähigkeit der einzelnen Kunststoffe von Röntgenstrahlung, vorgesehen ist.

Den Prozessschritten des Abtrennens von Metallteilen oder des Abtrennens von Polyvinylchlorid folgt der Prozessschritt der Zerkleinerung der metallreduzierten schweren kunststoffreichen Fraktion zu einer Korngröße kleiner gleich 8 mm, vorzugsweise kleiner gleich 7 mm, der Voraussetzung für die Separierung der metallreduzierten schweren kunststoffreichen Fraktion in Fraktionen unterschiedlicher Korngröße ist. Dabei wird ein Zerkleinerungsverfahren angewendet, welches einen Aufschluss der in der schweren kunststoffreichen Fraktion enthaltenen nichtaufgeschlossenen Metalle mit einem Prozentsatz von > 95 %, insbesondere >99% ermöglicht. Der Prozess der Zerkleinerung kann vorteilhaft aber auch mehrstufig, beispielsweise zweistufig erfolgen, wobei jeweils eine Zwischenpufferung möglich ist. Beispielsweise wäre denkbar, zunächst eine Zerkleinerung zu einer Korngröße kleiner gleich 14 mm, vorzugsweise kleiner gleich 12 mm durchzuführen und anschließend (ggf. nach Zwischenpufferung) eine weitere Zerkleinerung zu einer Korngröße kleiner gleich 8 mm, vorzugsweise kleiner gleich 7 mm nachzuschalten.

Gemäß einer Weiterbildung der Erfindung schließt sich ein Prozessschritt zur Separierung von Rohflusen, insbesondere mit einem mittleren Schüttgutgewicht von < 0,3 t/m³, vorzugsweise < 0,2 t/m³, und/oder Holzpartikeln an.

Eine andere Ausbildung des erfindungsgemäßen Verfahrens schlägt vor, dass die Auftrennung der metallreduzierten schweren kunststoffreichen Fraktion durch Siebung, vorzugsweise mit mindestens drei Sieblagen unterschiedlicher Lochgröße erfolgt. Beispielsweise können hier Lochgrößen von 7,0 mm, 4,0 mm und 1,5 mm zum Einsatz kommen.

Nach einer anderen Ausbildung der Erfindung erfolgt nach der Separierung der Auftrennung der metallreduzierten schweren kunststoffreichen Fraktion der Prozess der Abtrennung der Rohflusen und/oder vorhandener Holzpartikel getrennt für jede der bei der Auftrennung der kunststoffreichen Fraktion entstandenen kunststoffreichen Fraktionen unterschiedlicher Korn- oder Partikelgröße. In diesem Fall kann auf die Abtrennung von Rohflusen und Metallteilen vor der Auftrennung der schweren kunststoffreichen Fraktionen verzichtet werden.

Während der Aufbereitung der separierten kunststoffreichen Fraktion ist nach einer Ausbildung der Erfindung weiterhin vorgesehen, dass die separierten kunststoffreichen Fraktionen voneinander getrennt einem Prozess der Dichtetrennung unterzogen werden, wobei durch die Dichtetrennung in Abhängigkeit der kunststoffreichen Fraktionen unterschiedliche End- und/oder Zwischenprodukte entstehen. So entsteht durch die Dichtetrennung der kunststoffreichen Fraktion mit einer Korngröße im Bereich von etwa 0 mm bis 1,5 mm einerseits ein Kunststoffmahlgut, welches vorzugsweise gemeinsam mit den während der Aufbereitung der metallarmen Kunststoffabfälle entstehenden Rohflusen mit einem mittleren Schüttgutgewicht < 0,2 t/m³ weiterverarbeitet wird. Des Weiteren entsteht eine zumindest zum größten Teil aus nichtferromagnetischen Metallteilen bestehende Fraktion.

Während der Dichtetrennung der kunststoffreichen Fraktion mit einer Korngröße im Bereich von etwa 1,5 mm bis 4,0 mm entsteht eine vorveredelte Granulatfraktion sowie eine nichtferromagnetische Metallfraktion, welche in nachfolgenden Prozessschritten, vorzugsweise durch Siebung, in ihre Einzelmetallarten aufgetrennt werden kann. Ein Teil der so aufgetrennten Metallfraktion wird zusammen mit einer Metallfraktion weiterverarbeitet, die während der Dichtetrennung der kunststoffreichen Fraktion mit einer Korngröße von etwa 4,0 mm bis 7,0 mm entstanden ist (s. auch unten). Die gemeinsame Weiterverarbeitung erfolgt vorteilhaft durch eine optische Sortierung, in der die gemeinsame Metallfraktion in ihre Einzelmetallarten aufgetrennt wird. Es hat sich als vorteilhaft erwiesen, wenn der optischen Sortierung eine Prallbehandlung vorgeschaltet wird, um eine Verkugelung von Kupferlitzen zu erreichen. Dadurch ist eine deutliche Erhöhung der Effizienz der optischen Sortierung möglich.

Vor der erwähnten Siebung können die durch die Dichtetrennungen im Bereich von etwa 1,5 mm bis 7,0 mm entstandenen, nichtferromagnetischen Metallfraktionen einer Abscheidung von ferromagnetischen Bestandteilen zugeführt werden, um in den nichtferromagnetischen Metallfraktionen evtl. doch noch vorhandenes Feineisen (z.B feine Metalldrähte) abzutrennen und somit deren Reinheitsgrad zu erhöhen. So kann in den nichtferromagnetischen Metallfraktionen u. U. noch ein Feineisenanteil von bis zu ca. 5 % enthalten sein.

Als Zwischenprodukt der Dichtetrennung der kunststoffreichen Fraktion mit einer Korngröße von etwa 4,0 mm bis 7,0 mm entsteht ebenfalls eine ferromagnetische Metallfraktion, die zumindest zum Teil gemeinsam mit der Metallfraktion, die während der Dichtetrennung der kunststoffreichen Fraktion mit einer Korngröße im Bereich von etwa 1,5 mm bis 4,0 mm entstanden ist, aufbereitet wird. Als zweites Zwischenprodukt entsteht eine vorveredelte Granulatfraktion, welche vorzugsweise gemeinsam mit der Granulatfraktion, welche durch die Dichtetrennung der kunststoffreichen Fraktion mit der mittlern Korngröße entstanden ist, aufbereitet wird.

Die Granulatfraktionen werden einzeln oder gemeinsam während der Aufbereitung einer Oberflächenreinigung zum Entfernen von Stäuben und/oder Betriebsflüssigkeiten (insbesondere Fette und Öle, welche auch teilweise bereits in die Kunststoffteile eindiffundiert sein können) unterzogen. Der Oberflächenreinigung schließt sich in höchst zweckmäßiger Ausbildung der Erfindung ein Prozess der Abtrennung einer Polyvinylchlorid-Fraktion (PVC), insbesondere durch Nassdichtetrennung sowie ein Prozess zum Abtrennen von Polyolefinen, insbesondere durch Nassdichtetrennung an. Von der schon hochveredelten Granulatfraktion werden nach einer Weiterbildung der Erfindung in einem anschließenden Prozessschritt durch elektrostatische Abtrennung die vorhandenen Gummiteile entfernt, bzw. zumindest stark reduziert. Erwähnenswert ist, dass die derart veredelte Granulatfraktion natürlich bei Bedarf noch weiter zerkleinert bzw. aufgemahlen werden kann, wenn nachgeschaltete Prozesse dies erfordern.

Die erfindungsgemäße Anlage zur Aufbereitung einer schweren kunststoffreichen Fraktion (Rohgranulat), welches bei der Aufbereitung von metallarmen kunststoffreichen Stoffgemischen entstanden ist, weist Mittel auf, mit denen nacheinander folgende Verfahrensschritte durchführbar sind:
- Abtrennen von Metallteilen von der schweren kunststoffreichen Fraktion und Erhalt einer metallreduzierten Kunststofffraktion,
- Zerkleinern der nach dem Abtrennen der Metallteile verbleibenden metallreduzierten schweren, kunststoffreichen Fraktion,
- Auftrennen der nach dem Abtrennen der Metallteile verbleibenden metallreduzierten schweren, kunststoffreichen Fraktion in Kunststofffraktionen unterschiedlicher Korngröße,
- Aufbereiten der separierten kunststoffreichen Fraktionen zumindest teilweise in unterschiedlichen Prozessen.

Durch die Auftrennung der schweren kunststoffreichen Fraktion in mehre kunststoffreiche Fraktionen unterschiedlicher Korngröße und deren getrennte Aufbereitung wird eine wesentliche Prozessvoraussetzung dafür geschaffen, um am Ende des Prozesses hochreine Endfraktionen zu erhalten, wodurch wiederum eine verbesserte rohstoffliche Verwertung möglich ist.

Die in der erfindungsgemäßen Anlage vorhandenen Mittel zum Auftrennen der metallreduzierten und zerkleinerten kunststoffreichen Fraktion sind derart ausgebildet, dass eine erste kunststoffreiche Fraktion mit einer Korngröße im Bereich von etwa 0 mm bis 1,7 mm, vorzugsweise mit einer Korngröße von etwa 0 mm bis 1,5 mm, eine zweite kunststoffreiche Fraktion mit einer Korngröße im Bereich von etwa 1,3 mm bis 4,2 mm, vorzugsweise im Bereich von etwa 1,5 mm bis 4,0 mm und eine dritte kunststoffreiche Fraktion mit einer Korngröße im Bereich von etwa 3,8 mm bis 7,2 mm, vorzugsweise mit einer Korngröße von etwa 4,0 mm bis 7,0 mm erhalten wird.

Nach einer Ausbildung der Erfindung weist die aufzubereitende schwere und metallarme kunststoffreiche Fraktion (Rohgranulat) im Mittel ein Schüttgutgewicht von > 0,2 t/m³, insbesondere ein Schüttgutgewicht deutlich über 0,4t/m³ auf.

Eine andere Weiterbildung der Erfindung sieht vor, dass die Mittel zum Abtrennen der Metallteile von der schweren und metallarmen kunststoffreichen Fraktion Mittel zum Abtrennen von ferromagnetischen Bestandteilen in einem ersten Verfahrensschritt, vorzugsweise einen Magnetabscheider, insbesondere eine Magnettrommel oder eine Überbandmagneteinrichtung, sowie nachgelagerte Mittel zum Abtrennen von nichtferromagnetischen Metallteilen, insbesondere Mittel zur Wirbelstromabscheidung oder Mittel zur sensitiven Metallabtrennung auf der Basis der elektrischen Leitfähigkeit der Metallteile aufweisen.

Des Weiteren kann gemäß einer Weiterbildung vorgesehen sein, dass den Mitteln zum Abtrennen von Metallteilen Mittel zum Abtrennen von chlorreichen Polyvinylchlorid (PVC), insbesondere eine Röntgenstrahlen verwendende Separationseinrichtung nachgelagert ist. Gemäß einer bevorzugten Ausbildung der Mittel zum Zerkleinern der metallreduzierten kunststoffreichen Fraktion sind diese derart ausgebildet, das die kunststoffreiche Fraktion derart zerkleinert wird, dass ein Aufschluss von in der Fraktion enthaltenen nichtaufgeschlossenen Metallen von > 95 %, vorzugsweise 99% erreichbar ist.

Die Mittel zum Zerkleinern der metallreduzierten kunststoffreichen Fraktion können derart ausgebildet sein, dass ein Zerkleinern der kunststoffreichen Fraktion in eine Korngröße kleiner gleich 8,0 mm, vorzugsweise 7 mm erfolgt.

Nach den Mitteln zum Zerkleinern der metallreduzierten kunststoffreichen Fraktion sind nach einer Ausbildung der Erfindung Mittel zum Separieren von Rohflusen, insbesondere mit einem mittleren Schüttgutgewicht < 0,3 t/m³, insbesondere einem Schüttgutgewicht < 0,2 t/m³, vorgesehen. Es ist nicht zwingend erforderlich diese Mittel an dieser Stelle im Prozessablauf anzuordnen. Es besteht auch die Möglichkeit, diese nach der Auftrennung der metallreduzierten kunststoffreichen Fraktion in kunststoffreiche Fraktionen unterschiedlicher Korn- bzw. Partikelgröße für jede der erhaltenen kunststoffreichen Fraktionen getrennt anzuordnen. Vorzugsweise werden zur Separierung der Rohflusen Einrichtungen zur Windsichtung eingesetzt.

Gemäß einer Ausbildung der erfindungsgemäßen Anlage ist als Mittel zum Abtrennen der kunststoffreiche Fraktionen mit unterschiedlichen Korngrößen eine Siebeinrichtung mit mindestens drei Sieblagen unterschiedlicher Lochgröße vorgesehen.

Nach dem Auftrennen der metallreduzierten kunststoffreichen Fraktionen in mindestens drei kunststoffreiche Fraktionen unterschiedlicher Korngröße bzw. nach dem Durchlaufen der eventuell danach vorgesehenen Mitteln zum Abtrennen der Rohflusen und/oder Holzpartikel, vorzugsweise durch Dichtetrennung, sind nach einer Weiterbildung der erfindungsgemäßen Anlage getrennte Mittel zur Dichtetrennung der einzelnen separierten kunststoffreichen Fraktionen vorgesehen. Die Mittel zur Dichtetrennung der ersten separierten kunststoffreichen Fraktion, die vorzugsweise eine Korngröße von etwa 0 mm bis 1,5 mm aufweist, sind derart ausgebildet, dass als Endprodukt eine nichtferromagnetische Metallfraktion und Kunststoffmahlgut erhalten wird. Die Mittel zur Dichtetrennung der zweiten separierten kunststoffreichen Fraktion, die vorzugsweise eine Korngröße von etwa 1,5 mm bis 4,0 mm aufweist, und die davon getrennten Mittel zur Dichtetrennung der dritten separierten kunststoffreichen Fraktion mit vorzugsweise einer Korngröße von etwa 4,0 mm bis 7,0 mm sind derart ausgebildet, dass als Endprodukt jeweils eine nichtferromagnetische Metallfraktion und eine vorveredelte Granulatfraktion erhalten wird, wobei die erhaltenen Metallfraktionen und die erhaltenen Granulatfraktionen jeweils zumindest zum Teil gemeinsam weiter aufbereitet werden.

So sind nach einer Weiterbildung der erfindungsgemäßen Anlage den Mitteln zur Dichtetrennung der zweiten und dritten kunststoffreichen Fraktionen Mittel zur Oberflächenreinigung der erhaltenen Granulatfraktionen nachgeordnet. Diese Mittel sind derart ausgebildet, dass an den Kunststoffpartikeln anhaftende Stäube und/oder Betriebsflüssigkeiten, (insbesondere Fette und Öle) entfernt werden können. Den Mitteln zur Oberflächenreinigung sind nach einer bevorzugten Ausbildung zweistufig Mittel zum Abtrennen von Polyvinylchlorid (PVC) und danach zum Abtrennen von Polyolefinen nachgeordnet, wobei beide Mittel vorteilhafter Weise als Nassdichtetrennung ausgebildet sind. Nach den Mitteln zur Abtrennung von Polyolefinen aus der Kunststofffraktion sind gemäß einer Ausbildung der Erfindung Mittel zum Abtrennen von Gummipartikel aus der Gutfraktion vorgesehen.

Mit Hilfe der erfindungsgemäßen Anlage wird ein Kunststoffgranulat durch Aufbereitung eines durch die Aufbereitung von metallarmen kunststoffreichen Abfällen erzeugen Rohgranulats erhalten, dass aufgrund seines Reinheitsgrades einer stofflichen Verwertung mit hohen Qualitätsansprüchen zugeführt werden kann.

Nachfolgend wird die Erfindung anhand eines Ausführungsbeispiels näher beschrieben, die zugehörigen Zeichnungen zeigen:
- Fig.1: ein schematisches Fließdiagramm der nacheinander folgenden Prozessschritte zum Erhalt einer kunststoffreichen Leichtfraktion (Rohflusen) LF und einer kunststoffreichen Schwerfraktion (Rohgranulat) SF,
- Fig. 2: ein schematisches Fließdiagramm der nacheinander folgenden Prozessschritte zur Aufbereitung der kunststoffreichen Schwerfraktion (Rohgranulat) SF,

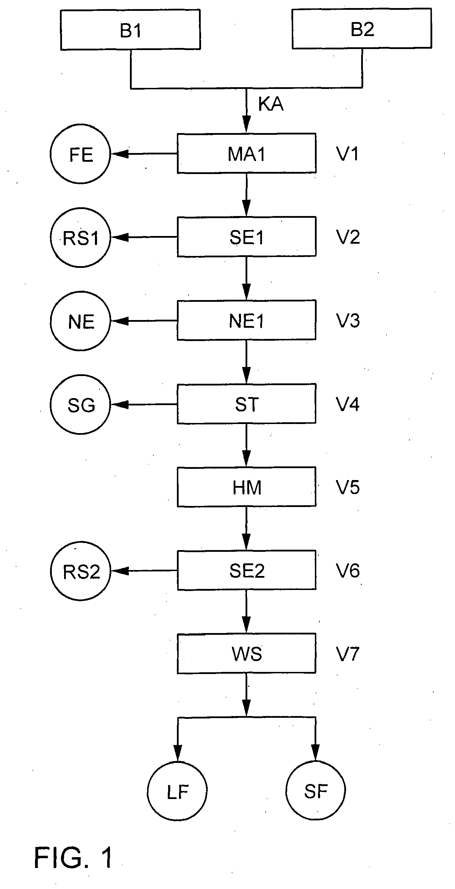

Das in Fig.1 gezeigte schematische Fließdiagramm zeigt den Prozessablauf bei der Aufbereitung von metallarmen, kunststoffreichen Stoffgemischen KA zum Erhalt einer kunststoffreichen Schwerfraktion SF und einer kunststoffreichen Leichtfraktion LF, die beispielsweise einem Shredderprozess von Altfahrzeugen nachgeschaltet sein können. Neben den metallarmen kunststoffreichen Stoffgemischen aus einem Shredderprozess können auch andere kunststoffreiche Stoffgemische mit Hilfe der Erfindung aufbereitet werden. Bei der Verwertung von Altfahrzeugen werden zunächst in einem an sich bekannten vorgeschalteten Shredderprozess in einem Shredder metallhaltige Abfälle durch einen Zerkleinerungsprozess aufgeschlossen. Im Nachgang erfolgt eine Abtrennung einer flugfähigen Shredder-Leichtfraktion SLF durch eine Absaugeinrichtung. Der nach der Absaugung verbleibende schwere, nichtflugfähige Stoffstrom wird auf einem Magnetabscheider in eine ferromagnetische und eine nichtferromagnetische Fraktion getrennt. Die ferromagnetische Fraktion wird als Shredderschrott bezeichnet und stellt das primäre, direkt in der Metallurgie einsetzbare Produkt des Shredders dar. Die verbleibende schwere, nichtferromagnetische Fraktion wird als Shredder-Schwerfraktion SSF bezeichnet.

Die Shredder-Leichtfraktion SLF wird allein oder zusammen mit der Shredder-Schwerfraktion SSF und gegebenenfalls mit weiteren metallarmen, kunststoffreichen Stoffgemischen weiter aufbereitet und werden, wenn sie dem Prozess unterworfen werden, als metallarme, kunststoffreiche Abfälle KA bezeichnet. Diese metallarmen, kunststoffreichen Stoffgemische weisen einen Metallanteil von < 20%, vorzugsweise einen Metallanteil im Größenbereich von 5 % auf.
Für die Einspeisung der metallarmen, kunststoffreichen Stoffgemische sind ein oder mehrere Aufgabebehälter B1 und/oder B2 vorgesehen, um den Aufbereitungsprozess von vorgelagerten Prozessen, beispielsweise dem Shredder-Prozess abzukoppeln.

In einem ersten Verfahrenschritt V1 werden die ferromagnetischen Bestandteile FE mittels eines Magnetabscheiders MA1 als ferromagnetische Fraktion abgetrennt, die damit einem metallurgischen Aufarbeitungsprozess zur stofflichen Wiederverwertung zugeführt werden können. Darauf folgt eine Abtrennung V2 einer ersten Rohsandfraktion RS1 mittels einer Siebeinrichtung SE1, die im Ausführungsbeispiel eine Lochgröße im Bereich von 10 -12 mm aufweist. Durch die Abtrennung dieser Rohsandfraktion werden die nachfolgenden Prozessschritte bezüglich der abgetrennten Rohsandfraktion entlastet. An den Verfahrensschritt V2 schließt sich ein Prozessschritt V3 "Abscheidung von nichtferromagnetischen Metallbestandteilen" (nichtferromagnetische Metallfraktion), wie Kupfer, Messing und Aluminium an. Vorzugsweise können hier Mittel NE1 zur Wirbelstromabscheidung oder zur sensitiven Metallabtrennung auf der Basis der elektrischen Leitfähigkeit der Metallteile zum Einsatz kommen. Der nachfolgende Prozessschritt V4 der Abtrennung grober Bestandteile reduziert maßgeblich den Verschleiß im nächsten Prozessschritt V5 der Hauptzerkleinerung. Zum Einsatz können im Prozessschritt V4 zur Abtrennung der groben Bestandteile (Schwergut) SG Mittel ST zur Schwergutabtrennung, sogenannte Air Knife-Systeme, kommen. Nach der Abtrennung des Schwergutes SG erfolgt im Prozessschritt V5 eine Zerkleinerung der verbleibenden Fraktionen mittels einer Hammermühle HM. Die Zerkleinerung erfolgt dabei derart, dass das Volumen der in den verbleibenden Fraktionen enthaltenen Leichtfraktion (Rohflusen) LF vergrößert wird, wodurch in einem späteren Prozessschritt V7 eine verbesserte und fraktionssaubere Auftrennung der verbleibenden Fraktionen in eine Leichtfraktion (Rohflusen) LF und eine Schwerfraktion (Rohgranulat) SF möglich ist. Zur Auftrennung der verbleibenden Fraktion sind nach dem Ausführungsbeispiel Mittel (WS) zur Windsichtung vorgesehen. Die entstehende Schwerfraktion (Rohgranulat) SF weist ein mittleres Schüttgutgewicht > 0,2 t/m³, insbesondere deutlich über 0,4 t/m³ auf. Zwischen dem Prozessschritt V5 der Zerkleinerung, vorzugsweise bei 20 mm, und dem Prozessschritt V7 der Auftrennung der verbleibenden Fraktionen ist ein Prozessschritt V6 vorgesehen, in dem eine zweite Rohsandfraktion RS2 mittels einer Siebeinrichtung SE2 abgetrennt wird. Die Lochgröße der Siebeinrichtung SE2 liegt vorzugsweise im Bereich von 4 - 8 mm.

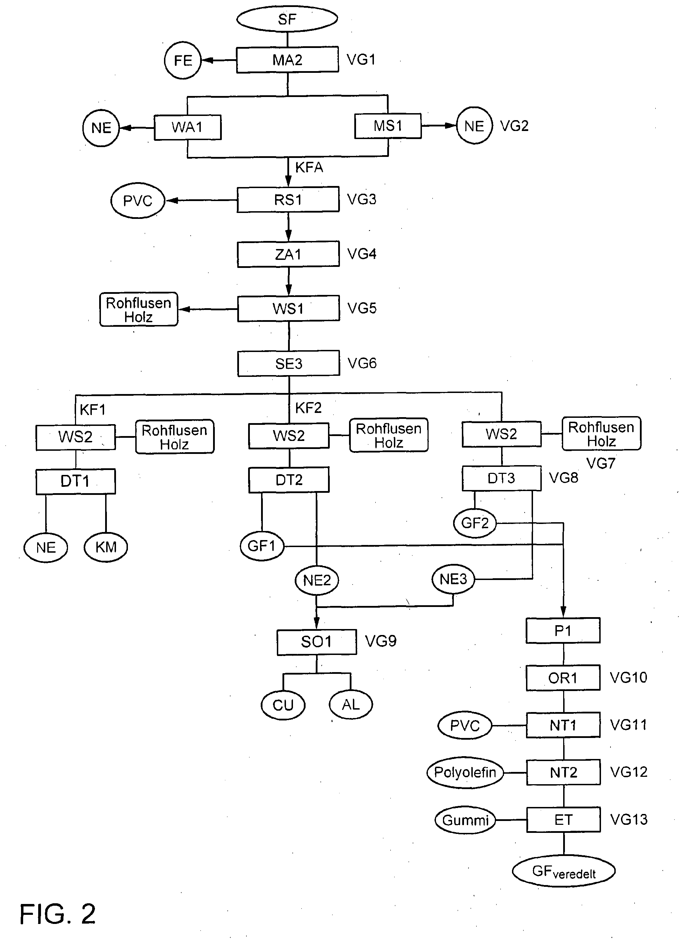

Das so erzeugte Rohgranulat SF (Schwerfraktion) wird während der Veredelung, deren erfindungsgemäßer Ablauf in der Fig. 2 detailliert beschrieben ist, in einem ersten Prozessschritt VG1 der Abscheidung der ferromagnetischen Bestandteile FE, die während der Zerkleinerung im Prozessschritt V5 aufgeschlossen wurden, unterzogen. Vorzugsweise kommt dafür ein Magnetabscheider MA2, beispielsweise eine Magnettrommel oder eine Überbandmagneteinrichtung zum Einsatz. Damit entsteht eine kunststoffreiche, metallreduzierte Fraktion KF, welche noch einen Restanteil von nichtferromagnetischen Metallen NE und Edelstahlbestandteilen NES aufweist. Die nichtferromagnetischen Metalle NE und abhängig von der Aufbereitungsart auch die Edelstahlbestandteile NES, werden im nächsten Prozessschritt VG2 abgetrennt. Kommt hier eine Einrichtung zur Wirbelstromabscheidung WA1 zum Einsatz, werden in diesem Prozessschritt VG2 die nichtferromagnetischen Metalle, wie Kupfer, Messing, Aluminium abgetrennt, soweit diese aufgeschlossen beziehungsweise freigelegt sind. Gemäß dem Ausführungsbeispiel werden hier metallische Bestandteile mit einer Korngröße > 1 mm abgetrennt. Es verbleibt eine metallreduzierte, kunststoffreiche Fraktion KFA, welche an Metallen dann noch Edelstahl sowie nichtaufgeschlossene Metallbestandteile enthält.

Alternativ kann in dem Prozessschritt VG2 auch ein Verfahren zur sensitiven Metallabscheidung MS1 auf der Basis der elektrischen Leitfähigkeit der unterschiedlichen Metallteile zum Einsatz kommen. Der Vorteil der sensitiven Metallabscheidung liegt darin, dass neben den nichtferromagnetischen Metallen auch Edelstahl, Blei sowie nicht aufgeschlossene Metalle abtrennbar sind und die unterschiedlichen Metalle getrennt voneinander abtrennbar und somit einer getrennten Metallaufbereitung zuführbar sind. Vorzugsweise ist die Sensitivität dabei einstellbar und damit auch die gewünschte Qualität der separierten Metallfraktion. Die Einstellung einer geringen Sensitivität führt zu einer sehr sauberen Metallfraktion, während eine Erhöhung der Sensitivität auch vermehrt die Abtrennung einer Kabelfraktion mit sich bringt. Bei Einsatz der sensitiven Metallabscheidung kann gegebenenfalls auf den Prozessschritt VG1 verzichtet werden.

Die im Prozessschritt VG2 erhaltene kunststoffreiche Fraktion KFA weist einen PVC-Anteil auf, der häufig im Bereich von 4-8% liegt. Die Korngröße der Fraktion ist > 5 mm, insbesondere > 10 mm. Im nächsten optionalen Prozessschritt VG3 wird der chlorreiche PVC-Anteil, der häufig auch erhöhte Blei- und Cadmiumwerte aufweist, über seine Absorptionsfähigkeit von Röntgenstrahlung separiert. Dies geschieht in einer x-Ray-Separationsanlage. Die so erhaltene chlorarme Kunststofffraktion weist einen Chlorgehalt von 0,6 bis 1 % auf. Alternativ und ebenfalls optional kann der chlorreiche PVC-Anteil aber auch bereits vor dem Prozessschritt VG1 (Abscheidung der ferromagnetischen Bestandteile FE) erfolgen. Die PVC-Abtrennung erfolgt in der Regel im Wesentlichen in einem nachgelagerten Prozessschritt einer Nassdichtetrennung (VG11), der bei kleineren Korngrößen stattfindet und später noch erläutert wird. Im Prozessschritt VG4 erfolgt eine Zerkleinerung dieser Fraktion auf eine Korngröße < 8, vorzugsweise kleiner gleich 7 mm. Als Verfahren wird eine Schneidzerkleinerung ZA1 mit Hilfe von Schneidmühlen gewählt, mit welcher ein Aufschluss der nichtaufgeschlossenen Metalle im Bereich > 99 % erfolgt. Dieser Prozessschritt ist vor allem wichtig, wenn im Prozessschritt VG2 eine Wirbelstromabscheidung zum Einsatz gekommen ist, mit der nichtaufgeschlossene Metallverbunde nicht abgetrennt wurden. Es ist zu erwähnen, dass der Verfahrensschritt VG4 auch mehrstufig erfolgen kann. Beispielsweise kann die Zerkleinerung zweistufig erfolgen, wobei jeweils eine Zwischenpufferung möglich ist. Beispielsweise wäre denkbar, zunächst eine Zerkleinerung zu einer Korngröße kleiner gleich 14 mm, vorzugsweise kleiner gleich 12 mm durchzuführen und anschließend (ggf. nach Zwischenpufferung) eine weitere Zerkleinerung zu einer Korngröße kleiner gleich 8 mm, vorzugsweise kleiner gleich 7 mm nachzuschalten. Dem Verfahrensschritt VG4 folgt eine Abtrennung VG5 der durch den Aufschluss entstehenden Kunststoffleichtpartikel und Holzpartikel durch Windsichtung WS1, vorzugsweise ist die Anlage WS1 regelbar ausgeführt, so dass auch Holzpartikel ausgeblasen werden. Dabei wird vorzugsweise die Restfeuchte der Materialien gemessen und die Absauggeschwindigkeit in Abhängigkeit der Restfeuchte reguliert. Im nachfolgenden Prozessschritt VG6 erfolgt eine Trennung der verbleibenden Fraktion in drei Fraktionen unterschiedlicher Korngröße durch eine Siebung SE3 mit mindestens drei Sieblagen unterschiedlicher Lochgröße. Es werden die metallreduzierte, kunststoffreiche Fraktion KF1 mit einer Korngröße im Bereich von etwa 0 mm bis ca. 1,5 mm, die metallreduzierte, kunststoffreiche Fraktion KF2 mit einer Korngröße von ca. 1,5 mm bis ca. 4 mm und die metallreduzierte, kunststoffreiche Fraktion KF3 mit einer Korngröße von ca. 4 mm bis ca. 7 mm erhalten. Bestandteile, die größer sind, werden zurückgeführt in den Prozessschritt VG4 (abermalige Zerkleinerung, Rückführung nicht näher dargestellt).

Die metallreduzierten, kunststoffreichen Fraktionen KF1 bis KF3 werden nachfolgend in unterschiedlichen Prozessen aufbereitet. Sollte im vorangehenden Prozessablauf auf den Prozessschritt VG5 der Abtrennung der Textil- und Holzpartikel verzichtet worden sein, kann der Verfahrensschritt der Windsichtung WS2 in den drei Prozessabläufen als Prozessschritt VG7 (gestrichelt angedeutet) vorgesehen werden. Allerdings hat das zur Folge, dass der apparative Aufwand erhöht wird, da mehrere Mittel zur Windsichtung vorgesehen sein müssen. An den Prozessschritt VG7 oder wenn die Windsichtung WS1 bereits im Prozessschritt VG5 durchgeführt wurde, an den Prozessschritt VG6 schließt sich in den Prozessabläufen für die einzelnen Fraktionen KF1 bis KF3 eine Separation von nichtferromagnetischen Metallteilen an (Prozessschritt VG8) an. Die Separation der nichtferromagnetischen Metallteile erfolgt mit Hilfe der Dichtetrennung DT1 bis DT3, in einer besonderen Ausführung kann eine kaskadenförmige Dichtetrennung, zum Beispiel 2-fach vorgesehen, sein, da immer nur eine Fraktion sauber abgetrennt werden kann.

Nach der Dichtetrennung DT1 der Kunststofffraktion KF1 wird ein Kunststoffmahlgut KM erhalten, welches gemeinsam mit den Rohflusen aus der ersten Aufbereitung der metallarmen kunststoffreichen Abfälle KA (Fig. 1, LF) einer Verwertung zugeführt werden kann. Das Kunststoffmahlgut KM ist ein chlorarmer Kunststoff mit einem Chloranteil < 1%. Als zweite Fraktion wird eine nichtferromagnetische Metallfraktion NE erhalten, die gegebenenfalls nochmals einer Magnetabscheidung zugeführt wird, um die restlichen ferromagnetischen Bestandteile abzutrennen. Danach besteht die nichtferromagnetische Metallfraktion NE weitestgehend aus Kupfer.

Nach der Dichtetrennung DT2 der metallreduzierten, kunststoffreichen Fraktion KF2 wird eine vorveredelte Granulatfraktion GF1 und eine ferromagnetische Metallfraktion NE2 erhalten. Nach der Dichtetrennung DT3 im Prozessschritt VG8 der metallreduzierten, kunststoffreichen Fraktion KF3 im Bereich von etwa 4 mm - 7 mm wird eine nichtferromagnetische Metallfraktion NE3 und eine vorveredelte Granulatfraktion GF2 erhalten. Die Granulatfraktion GF2 wird zusammen mit der Granulatfraktion GF1 einer weiteren Aufbereitung zugeführt, wobei beide Granulatfraktionen GF1, GF2 zur Abkopplung der weiteren Prozessschritte einer Zwischenspeicherung (Puffer P1) zugeführt werden können. Die nichtferromagnetische Metallfraktion NE3 wird gemeinsam mit der nichtferromagnetischen Metallfraktion NE2 aufbereitet.

Die nach der Dichtetrennung DT2 erhaltene nichtferromagnetische Metallfraktion NE2 erhält überwiegend Kupfer aber auch etwas Aluminium, die nach der Dichtetrennung DT3 erhaltene ferromagnetische Metallfraktion NE3 hingegen erhält überwiegend Aluminium aber auch etwas Kupfer. Dies liegt darin begründet, dass im vorausgegangenen Prozessschritt VG4 der Schneidzerkleinerung ZA1 sich das Aluminium nicht so gut schneiden lässt (es wird eher zu größeren, flachen Plättchen gedrückt), das Kupfer hingegen sehr wohl. Das Kupfer ist daher überwiegend in der feineren Fraktion NE2 zu finden.

Vor der Separierung der nichtferromagnetischen Metallfraktionen in ihre Bestandteile werden diese in einem Prozessschritt zunächst einer Magnetabscheidung (bspw. Magnettrommel) unterzogen, mit dem Ziel einer Abtrennung evtl. noch vorhandener feinster FE-Bestandteile (sog. Feineisen). Zur Separierung der nichtferromagnetischen Metallfraktionen NE2 und NE3 in ihre Bestandteile Kupfer CU und Aluminium AL ist nun vorgesehen, zunächst die Metallfraktion NE2 einer Siebung zuzuführen. Die Sieblochung kann dabei in etwa 0,9 mm bis 3 mm, vorzugsweise 1,5 mm bis 2,5 mm betragen. Hierdurch erhält man eine fast reine Kupferfraktion CU und eine Aluminiumfraktion AL. Die Aluminiumfraktion AL wird anschließend der Metallfraktion NE3 (überwiegend Aluminium) zugeführt. Anschließend wird der so erhaltene Materialstrom einer optischen Sortierung SO1 zugeführt, wobei der optische Sortierer auf die Minderheitenfraktion Kupfer (="rot") eingestellt wird und diese abtrennt (ausbläst). Das abgetrennte Kupfer hoher Reinheit kann gemeinsam einer metallurgischen Verwertung zugeführt werden. Gleichermaßen wird das abgetrennte Aluminium einer metallurgischen Verwertung zugeführt.
Es hat sich als vorteilhaft erwiesen, wenn der optischen Sortierung eine Prallbehandlung vorgeschaltet wird, um eine Verkugelung von Kupferlitzen zu erreichen. Dadurch ist eine deutliche Erhöhung der Effizienz der optischen Sortierung möglich.

Nun wird beschrieben, wie die vorveredelten Granulatfraktionen GF1 und GF2 gemeinsam weiter verarbeitet werden.

So erfolgt im Prozessschritt VG10 eine Oberflächenreinigung OR1 der Granulatpartikel zur Entfernung von Stäuben und Betriebsflüssigkeiten, wie beispielsweise Fetten und Ölen, die auch teilweise in den Kunststoff diffundiert sind. Die Oberflächenreinigung OR1 kann sowohl trocken als auch nass durch Zugabe von Wasser erfolgen, indem die Granulatfraktionen in einer Zentrifuge mittels Wasser gereinigt werden. Gegebenenfalls können dem Wasser in Abhängigkeit vom Verschmutzungsgrad nicht schäumende Tenside zugegeben werden. Nachfolgend wird im Prozessschritt VG11 eine erste Nassdichtetrennung NT1 durchgeführt, bei der eine Auftrennung der Stoffe hinsichtlich ihrer spezifischen Dichte erfolgt. Bewährt hat sich hierbei bislang ein Trennschnitt, der bei ca. 1 bis 1,5, bevorzugt bei etwa 1,25 liegt. Bei diesem Trennschnitt können die Anforderungen der Hochöfen an den Chlorgehalt gut erfüllt werden. Allerdings sind je nach Anforderungen auch andere Trennschnitte denkbar. Zur Trennung wird dem Wasser ein Mittel (Trennmedium) zugegeben, das die Dichte des Wassers derart verändert, dass die sogenannte Gutfraktion mit reduziertem Chlorgehalt schwimmt und das PVC als Sinkfraktion abgetrennt wird. Die Granulatfraktion wird vor dem eingesetzten Trennbehälter mit dem Trennmedium in einem Anmaischbehälter vermischt (wobei auch eine mengendosierte Zuführung zum Anmaischbehälter erfolgen kann, um den Feststoffgehalt regulieren zu können) und gemeinschaftlich dem Trennbehälter unter Einhaltung einer laminaren Strömung zugeführt. Vorzugsweise wird hierbei ein Trennbehälter mit Lamellen eingesetzt, der die Vorteile der laminaren Trennung mit denen der aus der Abwasserbehandlung bekannten Lamellentrenntechnik kombiniert. Optional wird das Trennmedium auf Temperatur gehalten, um Schwankungen in der Dichte zu vermeiden. Als Trennmedium wird beispielsweise Magnesium-Sulfat MgSO₄ eingesetzt. Beispielsweise beträgt der Anteil des Trennmediums am Wasser (temperaturabhängig) etwa 20-25%. Hierbei erfolgt eine Auftrennung in eine PVC-reiche und eine PVC-arme Granulatfraktion. Der Gummianteil der PVC-reichen Granulatfraktion beträgt noch ca. 30-40 %, wobei diese einer elektrostatischen Abtrennung zugeführt wird und sich der Gummianteil erheblich reduzieren lässt. Der abgetrennte Gummianteil kann einer Verwertung zugeführt werden, der Rest an PVC-reicher Granulatfraktion wird einer Entsorgung, beispielsweise einer Deponie zugeführt. Somit lassen sich auch hinsichtlich der PVC-reichen Granulatfraktion eine Reduktion der Entsorgungsmenge und eine Erhöhung der Verwertungsmenge erreichen.

Die im Prozessschritt VG11 erhaltene PVC-arme Granulatfraktion wird in einem darauffolgenden Prozessschritt VG12 einer zweiten Nassdichtetrennung NT2 mit Wasser unterzogen, vorzugsweise um Polyolefine (beispielsweise PS, PE, PP, ABS, PA) aus dieser Granulatfraktion abzutrennen. Hierbei hat sich ein Trennschnitt hinsichtlich der spezifischen Dichte von etwa 0,8 bis 1,2, insbesondere 1,0 als besonders vorteilhaft erwiesen, wobei je nach Anforderung auch hier andere Werte denkbar sind. Bei der Nassdichtetrennung NT2 entstehen eine Polyolefin-reiche und eine Polyolefin-arme Granulatfraktion. Die erhaltene Polyolefin-reiche Granulatfraktion besteht im Wesentlichen aus PE und PP und weist einen Gummianteil von < 2 % auf, der im Verfahrensschritt VG13 zumindest zu einem hohen Anteil ebenfalls durch elektrostatische Abtrennung entfernt bzw. reduziert wird. Erhalten wird eine veredelte Granulatfraktion GF_{veredelt}, welche einer (werkstofflichen) Verwertung mit hohen Qualitätsansprüchen zugeführt werden kann. Die veredelte Granulatfraktion GF_{veredelt} kann bei Bedarf noch einer weiteren Zerkleinerung (Nachvermahlung) zugeführt werden, wenn dies nachgeschaltete Verwertungsprozesse erfordern. Die Polyolefin-arme Granulatfraktion wird ebenfalls einer Verwertung zugeführt.

### Bezugszeichenliste

- B.1,B2: Aufgabebehälter
- DT1-DT3: Dichtetrennung
- E: Entsorgung
- ET1, ET2: elektrostatische Abtrennung
- FE: ferromagnetischen Bestandteile
- GF1,GF2: Granulatfraktion
- GF-PVC(+): PVC-reiche Granulatfraktion
- GF-PVC(-): PVC-arme Granulatfraktion
- GF-PO(+): Polyolefin-reiche Granulatfraktion
- GF-PO(-): Polyolefin-arme Granulatfraktion
- GF_{veredelt}: veredelte Granulatfraktion
- HM: Hammermühle
- KA: metallarme, kunststoffreiche Abfälle
- KF: metallreduzierte, kunststoffreiche Fraktion
- KFA: metallreduzierte, kunststoffreiche Fraktion
- KF1 - KF3: metallreduzierte, kunststoffreiche Fraktionen
- KM: Kunststoffmahlgut
- LF: Leichtfraktion (Rohflusen)
- MA1, MA2, MA3, MA3': Magnetabscheider
- MS1: sensitive Metallabscheidung
- NE1: Mittel zur Abscheidung nichtferromagnetischer Metallteile
- NE, NE2, NE3: nichtferromagnetische Metallteile
- NES: Edelstahlbestandteile
- NT1,NT2: Nassdichtetrennung
- OR1: Oberflächenreinigung
- PVC: Sinkfraktion
- P1: Puffer
- RS1: erste Rohsandfraktion
- RS2: zweite Rohsandfraktion
- SE1: erste Siebeinrichtung
- SE2: Siebeinrichtung
- SE3: Siebeinrichtung
- SE4: Siebeinrichtung
- SF: Schwerfraktion (Rohgranulat)
- SG: Schwergut
- SLF: Shredder-Leichtfraktion
- SO1: optische Sortierung
- SSF: Shredder-Schwerfraktion
- ST: Mittel zur Schwergutabtrennung
- V: Verwertung
- V1-V7: Prozessschritte zur Aufbereitung von metallarmen Kunststoffabfällen
- VG1-VG13: Prozessschritte zur Aufbereitung des Rohgranulates SF
- WA1: Wirbelstromabscheidung
- WS: Windsichtung
- WS1; WS2: Windsichtung
- XR0, XR1: x-Ray-Separation
- ZA1: Schneidzerkleinerung
- III: Teilprozess
- IV: Teilprozess

## Patentansprüche

1. Verfahren zur Aufbereitung einer schweren, kunststoffreichen Fraktion (SF) als Rohgranulat, welche bei der Aufbereitung von metallarmen, kunststoffreichen Stoffgemischen (KA) erhalten wurde, mit zumindest folgenden aufeinanderfolgenden Verfahrensschritten:
- Abtrennen (VG1, VG2) von Metallteilen (FE, NES,NE) von der schweren, kunststoffreichen Fraktion (SF),
- Zerkleinern (VG4) der nach dem Abtrennen von den Metallteilen verbleibenden, metallreduzierten, schweren, kunststoffreichen Fraktion (KFA),
- Auftrennen (VG6) der nach dem Abtrennen von den Metallteilen verbleibenden, metallreduzierten schweren, kunststoffreichen Fraktion (KFA) in kunststoffreiche Fraktionen (KF1 bis KF3) unterschiedlicher Korngröße
- Aufbereiten (VG8-VG13) der separierten, kunststoffreichen Fraktionen (KF1 bis KF3) zumindest teilweise in getrennten Prozessen.

2. Verfahren nach Anspruch 1, **dadurch gekennzeichnet, dass** die Aufbereitung (VG8-VG13) der separierten, kunststoffreichen Fraktionen (KF1 bis KF3) zumindest teilweise in gleichartigen getrennten Prozessschritten durchgeführt wird.

3. Verfahren nach Anspruch 1 oder 2, **dadurch gekennzeichnet, dass** die kunststoffreiche Fraktion (KFA) in eine kunststoffreiche Fraktion (KF1) mit einer Korngröße von etwa 0 bis 1,7 mm, eine kunststoffreiche Fraktion (KF2) mit einer Korngröße von etwa 1,3 mm bis 4,2 mm und eine kunststoffreiche Fraktion (KF3) mit einer Korngröße von etwa 3,8 mm bis ca. 7,2 mm aufgetrennt wird.

4. Verfahren nach einem der Ansprüche 1 bis 3, **dadurch gekennzeichnet, dass** die schwere, kunststoffreiche Fraktion (SF) im Mittel ein Schüttgutgewicht von > 0,2 t/m3 aufweist.

5. Verfahren nach einem der Ansprüche 1 bis 4, **dadurch gekennzeichnet, dass** das Abtrennen der Metallteile in zwei Prozessschritten (VG1,VG2) erfolgt, wobei im ersten Prozessschritt (VG1) ein Abtrennen von ferromagnetischen Bestandteilen (FE) und im zweiten Prozessschritt (VG2) eine Abtrennung von nichtferromagnetischen Metallteilen (NE,NES) erfolgt.

6. Verfahren nach Anspruch 5, **dadurch gekennzeichnet, dass** das Abtrennen von nichtferromagnetischen Metallteilen (NE, NES) durch Wirbelstromabscheidung (WA1) oder durch sensitive Metallabtrennung (MS1) auf der Basis der elektrischen Leitfähigkeit der Metallteile (NE, NES) erfolgt.

7. Verfahren nach einem der Ansprüche 1 bis 6, **dadurch gekennzeichnet, dass** nach dem Abtrennen von Metallteilen (FE, NE, NES) ein Separieren von chlorreichen PVC über die unterschiedliche Absorptionsfähigkeit von Röntgenstrahlung erfolgt.

8. Verfahren nach einem der Ansprüche 1 bis 7, **dadurch gekennzeichnet, dass** das Zerkleinern (VG4) der verbleibenden kunststoffreichen Fraktion zu einer Korngröße von kleiner gleich 8 mm erfolgt.

9. Verfahren nach Anspruch 8, **dadurch gekennzeichnet, dass** das Zerkleinern (VG4) der verbleibenden kunststoffreichen Fraktion derart erfolgt, dass ein Aufschluss der nicht aufgeschlossenen Metalle von > 95% erfolgt.

10. Verfahren nach einem der Ansprüche 1 bis 9, **dadurch gekennzeichnet, dass** nach dem Zerkleinern (VG4) sich ein Prozessschritt (VG5) zur Separierung von Rohflusen und/oder Holzpartikeln anschließt.

11. Verfahren nach einem der Ansprüche 1 bis 10, **dadurch gekennzeichnet, dass** die Auftrennung (VG6) der verbleibenden, kunststoffreichen Fraktion in die kunststoffreichen Fraktionen (KF1 bis KF3) durch Siebung (SE3) erfolgt.

12. Verfahren nach einem der Ansprüche 1 bis 11, **dadurch gekennzeichnet, dass** die kunststoffreichen Fraktionen (KF1 bis KF3) unabhängig voneinander einer Separierung von Rohflusen und/oder Holzpartikeln unterzogen werden.

13. Verfahren nach einem der Ansprüche 1 bis 12, **dadurch gekennzeichnet, dass** die kunststoffreiche Fraktion (KF1) mit einer Korngröße von 0 bis 1,7 mm einer Dichtetrennung (VG8) derart unterzogen wird, dass als Endprodukt eine nichtferromagnetische Metallfraktion (NE) und ein Kunststoffmahlgut (KM) entstehen.

14. Verfahren nach Anspruch 13, **dadurch gekennzeichnet, dass** das Kunststoffmahlgut (KM) ein chlorarmer Kunststoff mit einem Chloranteil < 1% ist.

15. Verfahren nach einem der Ansprüche 3 bis 14, **dadurch gekennzeichnet, dass** die kunststoffreiche Fraktion (KF2) mit einer Korngröße von 1,3 mm bis 4,2 mm einer Dichtetrennung (VG8) derart unterzogen wird, dass als Zwischenprodukt eine vorveredelte Granulatfraktion (GF1) und eine nichtferromagnetische Metallfraktion (NE2) entsteht.

16. Verfahren nach Anspruch 15, **dadurch gekennzeichnet, dass** die nichtferromagnetische Metallfraktion (NE2) einem Teilprozess zugeführt wird, in dem zumindest ein Teil der Metallfraktion (NE2) einem weiteren Sortierungsprozess unterworfen wird.

17. Verfahren nach einem der Ansprüche 3 bis 16, **dadurch gekennzeichnet, dass** die kunststoffreiche Fraktion (KF3) mit einer Korngröße von 3,8 mm bis 7,2 mm einer Dichtetrennung (VG8) derart unterworfen wird, dass als Zwischenprodukt eine vorveredelte Granulatfraktion (GF2) und eine nichtferromagnetische Metallfraktion (NE3) entsteht.

18. Verfahren nach den Ansprüchen 15 bis 17, **dadurch gekennzeichnet, dass** die nichtferromagnetische Metallfraktion (NE3) einem Teilprozess zugeführt wird, in dem zumindest ein Teil der Metallfraktion (NE3) einem weiteren Sortierungsprozess unterworfen wird, wobei die Sortierung gemeinsam mit einem Teilstrom aus der ferromagnetischen Metallfraktion (NE2) erfolgt.

19. Verfahren nach wenigstens einem der Ansprüche 16 bis 18, **dadurch gekennzeichnet, dass** die nichtferromagnetische Metallfraktion (NE2) vor dem Sortierungsprozess einer Siebung zugeführt wird.

20. Verfahren nach wenigstens einem der Ansprüche 16 bis 19, **dadurch gekennzeichnet, dass** die nichtferromagnetischen Metallfraktionen (NE2, NE3) einer Abtrennung von ferromagnetischen Bestandteilen zugeführt werden.

21. Verfahren nach wenigstens einem der Ansprüche 17 bis 20, **dadurch gekennzeichnet, dass** die vorveredelte Granulatfraktion (GF1) und die vorveredelte Granulatfraktion (GF2) einem Teilprozess zugeführt werden, in dem diese einer Oberflächenreinigung (VG10) zur Entfernung von Stäuben und/oder Betriebsflüssigkeiten unterzogen werden.

22. Verfahren nach Anspruch 21, **dadurch gekennzeichnet, dass** die Oberflächenreinigung (VG10) mittels Wasser in einer Zentrifuge durchgeführt wird.

23. Verfahren nach wenigstens einem der Ansprüche 17 bis 22, **dadurch gekennzeichnet, dass** in einem nachfolgenden Prozessschritt (VG11) eine Auftrennung der Granulatfraktionen (GF1, GF2) in eine PVC-reiche und eine PVC-arme Granulatfraktion erfolgt.

24. Verfahren nach Anspruch 23, **dadurch gekennzeichnet, dass** in einem nachfolgenden Prozessschritt (VG12) eine Auftrennung der PVC-armen Granulatfraktion in eine Polyolefin-reiche und eine Polyolefin-arme Granulatfraktion erfolgt.

25. Verfahren nach Ansprüche 24, **dadurch gekennzeichnet, dass** in einem sich anschließenden Prozessschritt (VG13) von der Polyolefin-reichen Granulatfraktion eine Abtrennung von Gummi erfolgt.

26. Verfahren nach wenigstens einem der Ansprüche 24 und 25, **dadurch gekennzeichnet, dass** in einem weiteren Prozessschritt von der PVC-reichen Granulatfraktion eine Abtrennung von Gummi erfolgt.

27. Verfahren nach wenigstens einem der Ansprüche 1 bis 26, **dadurch gekennzeichnet, dass** die metallarmen, kunststoffreichen Abfälle (KA) zumindest zum Teil Shredder-Rückstände metallhaltiger Abfälle sind.

28. Verfahren nach wenigstens einem der Ansprüche 1 bis 27, **dadurch gekennzeichnet, dass** die metallarmen, kunststoffreichen Abfälle (KA) zumindest zum Teil metallarme, kunststoffreiche Abfälle sind, die zumindest teilweise in Fahrzeug-Shredderprozessen erzeugt wurden.

29. Anlage zur Aufbereitung einer schweren, kunststoffreichen Fraktion (SF), welche bei der Aufbereitung von metallarmen, kunststoffreichen Stoffgemischen (KA) erhalten wurden, **dadurch gekennzeichnet, dass** Mittel (MA2, WA1, MS1, ZA1, SE3, DT1 bis DT3, P1, OR1, NT1, NT2, ET, KM, SO1) angeordnet sind, mit denen nacheinander folgende Verfahrensschritte durchführbar sind:
- Abtrennen (VG1,VG2) von Metallteilen (FE,NES,NE) von der schweren, kunststoffreichen Fraktion
- Zerkleinern (VG4) der nach dem Abtrennen der Metallteile verbleibenden metallreduzierten schweren, kunststoffreichen Fraktion (KFA),
- Auftrennen (VG6) der nach dem Abtrennen der Metallteile verbleibenden metallreduzierten schweren, kunststoffreichen Fraktion (KFA) in kunststoffreiche Fraktionen (KF1 bis KF3) unterschiedlicher Korngröße,
- Aufbereiten (VG7-VG13) der separierten, kunststoffreichen Fraktionen (KF1 bis KF3) zumindest teilweise in getrennten Prozessen,
wobei Mittel (SE3) vorgesehen sind, mittels denen die kunststoffreiche Fraktion (KFA) in eine kunststoffreiche Fraktion (KF1) mit einer Korngröße von etwa 0 bis 1,7 mm, eine kunststoffreiche Fraktion (KF2) mit einer Korngröße von etwa 1,3 mm bis 4,2 mm und eine kunststoffreiche Fraktion (KF3) mit einer Korngröße von etwa 3,8 mm bis ca. 7,2 mm auftrennbar ist.

30. Anlage nach Anspruch 29, **dadurch gekennzeichnet, dass** die schwere, kunststoffreiche Fraktion (SF) im Mittel ein Schüttgutgewicht von > 0,2 t/m3 aufweist.

31. Anlage nach Anspruch 29 oder 30, **dadurch gekennzeichnet, dass** Mittel (MA2) zum Abtrennen von ferromagnetischen Bestandteilen (FE) im Prozessschritt (VG1) vorgesehen sind.

32. Anlage nach Anspruch 31, dass den Mitteln (MA2) zum Abtrennen von ferromagnetischen Bestandteilen (FE) Mittel zum Abtrennen von nichtferromagnetischen Metallteilen (NE, NES) nachgelagert sind.

33. Anlage nach wenigstens einem der Ansprüche 29 bis 32, **dadurch gekennzeichnet, dass** den Mitteln zum Abtrennen von Metallteilen (FE, NE, NES) Mittel zum Separieren von chlorreichen PVC nachgelagert sind.

34. Anlage nach wenigstens einem der Ansprüche 29 bis 33, **dadurch gekennzeichnet, dass** die Mittel (ZA1) zum Zerkleinern (VG4) der erhaltenen kunststoffreichen Fraktion (KFA) derart ausgebildet sind, dass ein Aufschluss von nicht aufgeschlossenen Metallen > 95% erreichbar ist.

35. Anlage nach wenigstens einem der Ansprüche 29 bis 34, **dadurch gekennzeichnet, dass** die Mittel (ZA1) zum Zerkleinern (VG4) der erhaltenen kunststoffreichen Fraktion (KFA) derart ausgebildet sind, dass ein Zerkleinern der erhaltenen kunststoffreichen Fraktion (KFA) in eine Korngröße von kleiner gleich 8 mm erfolgt.

36. Anlage nach wenigstens einem der Ansprüche 29 bis 35, **dadurch gekennzeichnet, dass** nach den Mitteln (ZA1) zum Zerkleinern der kunststoffreichen Fraktion Mittel (WS1) zum Separieren von Rohflusen, und/oder Holzpartikel vorgesehen sind.

37. Anlage nach wenigstens einem der Ansprüche 29 bis 36, **dadurch gekennzeichnet**, das die Mittel (SE3) zum Auftrennen der verbleibenden, kunststoffreichen Fraktion (KFA) eine Siebeinrichtung mit mindestens drei Sieblagen unterschiedlicher Lochgröße ist.

38. Anlage nach wenigstens einem der Ansprüche 29 bis 37, **dadurch gekennzeichnet, dass** nach den Mitteln (SE3) zum Auftrennen der verbleibenden, kunststoffreichen Fraktion (KFA) Mittel (WS2) zum getrennten Separieren von Rohflusen und/oder Holzpartikeln von den nach dem Auftrennen der kunststoffreichen Fraktion (KFA) erhaltenen kunststoffreichen Fraktionen (KF1 bis KF3) angeordnet sind.

39. Anlage nach wenigstens einem der Ansprüche 29 bis 38, **dadurch gekennzeichnet, dass** den Mitteln (SE3) zum Auftrennen der kunststoffreichen Fraktionen (KFA) Mittel (DT1) zur Dichtetrennung der kunststoffreichen Fraktion (KF1) nachgeordnet sind, die derart ausgebildet sind, dass nach der Dichtetrennung ein Kunststoffmahlgut (KM) und eine nichtferromagnetische Metallfraktion (NE) erhalten wird.

40. Anlage nach wenigstens einem der Ansprüche 29 bis 39, **dadurch gekennzeichnet, dass** den Mitteln (SE3) zum Auftrennen der kunststoffreichen Fraktion (KFA) Mittel (DT2) zur Dichtetrennung der erhaltenen kunststoffreichen Fraktion (KF2) nachgeordnet ist, die derart ausgebildet sind, dass nach der Dichtetrennung eine Granulatfraktion (GF1) und eine nichtferromagnetische Metallfraktion (NE2) erhalten wird.

41. Anlage nach wenigstens einem der Ansprüche 29 bis 40, **dadurch gekennzeichnet, dass** den Mitteln (SE3) zum Auftrennen der kunststoffreichen Fraktion (KFA) Mittel (DT3) zur Dichtetrennung der erhaltenen kunststoffreichen Fraktion (KF3) nachgeordnet sind, die derart ausgebildet sind, dass nach der Dichtetrennung eine Granulatfraktion (GF2) und eine nichtferromagnetische Metallfraktion (NE3) erhalten wird.

42. Anlage nach Anspruch 40 und 41, **dadurch gekennzeichnet, dass** in einem Teilprozess Mittel (SO1) vorgesehen sind, durch die zumindest ein Teil der nichtferromagnetischen Metallfraktionen (NE2, NE3) einem weiteren Sortierungsprozess unterworfen wird.

43. Anlage nach Ansprüch 40, **dadurch gekennzeichnet, dass** diese im Teilprozess Mittel zur Siebung der nichtferromagnetischen Metallfraktion (NE2) aufweist.

44. Anlage nach Anspruch 40 und 41, **dadurch gekennzeichnet, dass** in einem Teilprozess Mittel (OR1) zur Oberflächenreinigung der Granulatfraktionen (GF1) und/oder (GF2) von Stäuben und/oder Betriebsflüssigkeiten vorgesehen sind.

45. Anlage nach Anspruch 44, **dadurch gekennzeichnet, dass** den Mitteln (OR1) zur Oberflächenreinigung der Granulatfraktionen (GF1) und (GF2) Mittel (NT1) für eine erste Nassdichtetrennung nachgeordnet sind, in denen eine Auftrennung der Granulatfraktionen (GF1, GF2) in eine PVC-reiche und eine PVC-arme Granulatfraktion erfolgt.

46. Anlage nach Anspruch 45, **dadurch gekennzeichnet, dass** den Mitteln (NT1) der ersten Nassdichtetrennung Mittel (NT2) für eine zweite Nassdichtetrennung nachgeordnet sind, in denen eine Auftrennung der PVC-armen Granulatfraktion in eine Polyolefin-reiche und eine Polyolefin-arme Granulatfraktion erfolgt.

47. Anlage nach Anspruch 45 und 46, **dadurch gekennzeichnet, dass** den Mitteln (NT1 bzw. NT2) zur Nassdichtetrennung Mittel (ET1 bzw. ET2) zur Abtrennung von Gummi nachgeordnet sind.

## Claims

1. Process for the treatment of a heavy, plastics-rich fraction (SF) in the form of crude granulate the said fraction being obtained during the treatment of low-metal-content, plastics-rich mixtures (KA), with at least the following successive steps:
- removal (VG1, VG2) of metal constituents (FE, NES, NE) from the heavy, plastics-rich fraction (SF),
- comminution (VG4) of the reduced-metal-content, heavy, plastics-rich fraction (KFA) remaining after the removal of the metal constituents,
- separation (VG6), into plastics-rich fractions (KF1 to KF3) of differing grain size, of the reduced-metal-content heavy, plastics-rich fraction (KFA) remaining after the removal of the metal constituents,
- treatment (VG8-VG13) of the separated, plastics-rich fractions (KF1 to KF3) at least to some extent in separate processes.

2. Process according to Claim 1, **characterized in that** the treatment (VG8-VG13) of the separated, plastics-rich fractions (KF1 to KF3) is carried out at least to some extent in very similar separate steps.

3. Process according to Claim 1 or 2, **characterized in that** the plastics-rich fraction (KFA) is separated to give a plastics-rich fraction (KF1) with grain size about 0 to 1.7 mm, a plastics-rich fraction (KF2) with grain size about 1.3 mm to 4.2 mm and a plastics-rich fraction (KF3) with grain size about 3.8 mm to approximately 7.2 mm.

4. Process according to any of Claims 1 to 3, **characterized in that** the average bulk density of the heavy, plastics-rich fraction (SF) is > 0.2 t/m³.

5. Process according to any of Claims 1 to 4, **characterized in that** the removal of the metal constituents takes place in two steps (VG1, VG2), where removal of ferromagnetic constituents (FE) takes place in the first step (VG1) and removal of non-ferromagnetic metal constituents (NE, NES) takes place in the second step (VG2).

6. Process according to Claim 5, **characterized in that** the removal of non-ferromagnetic metal constituents (NE, NES) is achieved via eddy current separation (WA1) or via sensitive metal removal (MS1) based on the electrical conductivity of the metal constituents (NE, NES).

7. Process according to any of Claims 1 to 6, **characterized in that** after the removal of metal constituents (FE, NE, NES), separation of chlorine-rich PVC is achieved by way of the difference in X-ray absorption.

8. Process according to any of Claims 1 to 7, **characterized in that** the comminution (VG4) of the remaining plastics-rich fraction gives a grain size smaller than or equal to 8 mm.

9. Process according to Claim 8, **characterized in that** the comminution (VG4) of the remaining plastics-rich fraction achieves > 95% detachment of metals attached to other materials.

10. Process according to any of Claims 1 to 9, **characterized in that** the comminution (VG4) is followed by a step (VG5) for the separation of fluff and/or of wood particles.

11. Process according to any of Claims 1 to 10, **characterized in that** the separation (VG6) of the remaining, plastics-rich fraction into the plastics-rich fractions (KF1 to KF3) is achieved via sieving (SE3).

12. Process according to any of Claims 1 to 11, **characterized in that** the plastics-rich fractions (KF1 to KF3) are mutually independently subjected to separation of fluff and/or of wood particles.

13. Process according to any of Claims 1 to 12, **characterized in that** the plastics-rich fraction (KF1) with grain size from 0 to 1.7 mm is subjected to separation by density (VG8) in a manner that produces, as end product, a non-ferromagnetic metal fraction (NE) and a ground plastics material (KM).

14. Process according to Claim 13, **characterized in that** the ground plastics material (KM) is a low-chlorine-content plastic with chlorine content < 1%.

15. Process according to any of Claims 3 to 14, **characterized in that** the plastics-rich fraction (KF2) with grain size from 1.3 mm to 4.2 mm is subjected to separation by density (VG8) in a manner that produces, as intermediate product, a granulate fraction (GF1) requiring further finishing processes, and a non-ferromagnetic metal fraction (NE2).

16. Process according to Claim 15, **characterized in that** the non-ferromagnetic metal fraction (NE2) is introduced into a subprocess in which at least a portion of the metal fraction (NE2) is subjected to a further sorting process.

17. Process according to any of Claims 3 to 16, **characterized in that** the plastics-rich fraction (KF3) with grain size from 3.8 mm to 7.2 mm is subjected to separation by density (VG8) in a manner that produces, as intermediate product, a granulate fraction (GF2) requiring further finishing processes, and a non-ferromagnetic metal fraction (NE3).

18. Process according to Claims 15 to 17, **characterized in that** the non-ferromagnetic metal fraction (NE3) is introduced into a subprocess in which at least a portion of the metal fraction (NE3) is subjected to a further sorting process, where the sorting takes place together with a substream derived from the ferromagnetic metal fraction (NE2).

19. Process according to at least one of Claims 16 to 18, **characterized in that**, before the sorting process, the non-ferromagnetic metal fraction (NE2) is subjected to sieving.

20. Process according to at least one of Claims 16 to 19, **characterized in that** the non-ferromagnetic metal fractions (NE2, NE3) are introduced into a procedure to remove ferromagnetic constituents.

21. Process according to at least one of Claims 17 to 20, **characterized in that** the granulate fraction (GF1) requiring further finishing processes and the granulate fraction (GF2) requiring further finishing processes are introduced into a subprocess in which these are subjected to the surface cleaning (VG10) for the removal of dusts and/or liquids.

22. Process according to Claim 21, **characterized in that** the surface cleaning (VG10) is achieved by means of water in a centrifuge.

23. Process according to at least one of Claims 17 to 22, **characterized in that**, in a subsequent step (VG11), the granulate fractions (GF1, GF2) are separated into a PVC-rich granulate fraction and a low-PVC-content granulate fraction.

24. Process according to Claim 23, **characterized in that**, in a subsequent step (VG12), the low-PVC-content granulate fraction is separated into a polyolefin-rich granulate fraction and a low-polyolefin-content granulate fraction.

25. Process according to Claim 24, **characterized in that**, in a following step (VG13), rubber is removed from the polyolefin-rich granulate fraction.

26. Process according to at least one of Claims 24 and 25, **characterized in that**, in a further step, rubber is removed from the PVC-rich granulate fraction.

27. Process according to at least one of Claims 1 to 26, **characterized in that** the low-metal-content, plastics-rich wastes (KA) are at least to some extent shredder residues of metal-containing wastes.

28. Process according to at least one of Claims 1 to 27, **characterized in that** the low-metal-content, plastics-rich wastes (KA) are least to some extent low-metal-content, plastics-rich wastes which at least to some extent have been produced in vehicle-shredder processes.

29. System for the treatment of a heavy, plastics-rich fraction (SF) which has been obtained during the treatment of low-metal-content, plastics-rich mixtures (KA), **characterized in that** there are means (MA2, WA1, MS1, ZA1, SE3, DT1 to DT3, P1, OR1, NT1, NT2, ET, KM, SO1) arranged with which it is possible to carry out the following steps in succession:
- removal (VG1, VG2) of metal constituents (FE, NES, NE) from the heavy, plastics-rich fraction (SF),
- comminution (VG4) of the reduced-metal-content, heavy, plastics-rich fraction (KFA) remaining after the removal of the metal constituents,
- separation (VG6), into plastics-rich fractions (KF1 to KF3) of differing grain size, of the reduced-metal-content, heavy, plastics-rich fraction (KFA) remaining after the removal of the metal constituents,
- treatment (VG8-VG13) of the separated, plastics-rich fractions (KF1 to KF3) at least to some extent in separate processes,
there being means (SE3) provided that can separate the plastics-rich fraction (KFA) to give a plastics-rich fraction (KF1) with grain size about 0 to 1.7 mm, a plastics-rich fraction (KF2) with grain size about 1.3 mm to 4.2 mm and a plastics-rich fraction (KF3) with grain size about 3.8 mm to approximately 7.2 mm.

30. System according to Claim 29, **characterized in that** the average bulk density of the heavy, plastics-rich fraction (SF) is > 0.2 t/m³.

31. System according to Claim 29 or 30, **characterized in that** there are means (MA2) provided for the removal of ferromagnetic constituents (FE) in step (VG1).

32. System according to Claim 31, **characterized in that**, downstream of the means (MA2) for the removal of ferromagnetic constituents (FE), there are means for the removal of non-ferromagnetic metal constituents (NE, NES).

33. System according to at least one of Claims 29 to 32, **characterized in that**, downstream of the means for the removal of metal constituents (FE, NE, NES), there are means for the separation of chlorine-rich PVC.

34. System according to at least one of Claims 29 to 33, **characterized in that** the design of the means (ZA1) for the comminution (VG4) of the resultant plastics-rich fraction (KFA) permits > 95% detachment of metals attached to other materials.

35. System according to at least one of Claims 29 to 34, **characterized in that** the design of the means (ZA1) for the comminution (VG4) of the resultant plastics-rich fraction (KFA) is such that the comminution of the resultant plastics-rich fraction (KFA) gives a grain size smaller than or equal to 8 mm.

36. System according to at least one of Claims 29 to 35, **characterized in that**, downstream of the means (ZA1) for the comminution of the plastics-rich fraction, there are means (WS1) provided for the separation of fluff and/or of wood particles.

37. System according to at least one of Claims 29 to 36, **characterized in that** the means (SE3) for the separation of the remaining, plastics-rich fraction (KFA) are sieve equipment with at least three sieves.

38. System according to at least one of Claims 29 to 37, **characterized in that**, downstream of the means (SE3) for the separation of the remaining, plastics-rich fraction (KFA), there are means (WS2) arranged for the separate separation of fluff and/or of wood particles from the plastics-rich fractions (KF1 to KF3) obtained after the separation of the plastics-rich fraction (KFA).

39. System according to at least one of Claims 29 to 38, **characterized in that**, downstream of the means (SE3) for the separation of the plastics-rich fractions (KFA), there are means (DT1) for the separation by density of the plastics-rich fraction (KF1), designed in a manner that gives, after the separation by density, a ground plastics material (KM) and a non-ferromagnetic metal fraction (NE).

40. System according to at least one of Claims 29 to 39, **characterized in that**, downstream of the means (SE3) for the separation of the plastics-rich fraction (KFA), there are means (DT2) for the separation by density of the resultant plastics-rich fraction (KF2), designed in a manner that gives, after the separation by density, a granulate fraction (GF1) and a non-ferromagnetic metal fraction (NE2).

41. System according to at least one of Claims 29 to 40, **characterized in that**, downstream of the means (SE3) for the separation of the plastics-rich fraction (KFA), there are means (DT3) for the separation by density of the resultant plastics-rich fraction (KF3), designed in a manner that gives, after the separation by density, a granulate fraction (GF2) and a non-ferromagnetic metal fraction (NE3).

42. System according to Claims 40 and 41, **characterized in that**, in a subprocess, there are means (SO1) provided by which at least a portion of the non-ferromagnetic metal fractions (NE2, NE3) is subjected to a further sorting process.

43. System according to Claim 40, **characterized in that** this comprises, in the subprocess, means for the sieving of the non-ferromagnetic metal fraction (NE2).

44. System according to Claims 40 and 41, **characterized in that**, in a subprocess, there are means (OR1) provided for the surface cleaning of the granulate fractions (GF1) and/or (GF2) to remove dusts and/or liquids.

45. System according to Claim 44, **characterized in that**, downstream of the means (OR1) for the surface cleaning of the granulate fractions (GF1) and (GF2), there are means (NT1) which serve for a first separation by density in a liquid, and in which the granulate fractions (GF1, GF2) are separated into a PVC-rich granulate fraction and a low-PVC-content granulate fraction.

46. System according to Claim 45, **characterized in that**, downstream of the means (NT1) of the first separation by density in a liquid, there are means (NT2) which serve for a second separation by density in a liquid and in which the low-PVC-content granulate fraction is separated into a polyolefin-rich granulate fraction and a low-polyolefin-content granulate fraction.

47. System according to Claims 45 and 46, **characterized in that**, downstream of the means (NT1 and, respectively, NT2) for the separation by density in a liquid, there are means (ET1 and, respectively, ET2) for the removal of rubber.

## Revendications

1. Procédé pour préparer une fraction lourde, riche en matières plastiques (SF) en tant que granulat brut, qui a été obtenue lors de la préparation de mélanges de substances riches en matière plastiques et pauvres en métaux (KA), comprenant au moins les étapes de procédé successives suivantes:
- séparer (VG1, VG2) des parties métalliques (FE, NES, NE) de la fraction lourde riche en matières plastiques (SF),
- broyer (VG4) la fraction lourde riche en matières plastiques (KFA) appauvrie en métaux restant après la séparation des parties métalliques,
- diviser (VG6) la fraction lourde riche en matières plastiques (KFA), appauvrie en métaux restant après la séparation des parties métalliques en fractions riches en matières plastiques (KF1 à KF3) de granulométrie différente,
- préparer (VG8 - VG13) les fractions séparées riches en matière plastiques (KF1 à KF3) au moins en partie dans des processus différents.

2. Procédé selon la revendication 1, **caractérisé en ce que** l'on effectue la préparation (VG8 - VG13) des fractions séparées riches en matières plastiques (KF1 à KF3) au moins en partie dans des étapes de processus similaires séparées.

3. Procédé selon la revendication 1 ou 2, **caractérisé en ce que** l'on divise la fraction riche en matières plastiques (KFA) en une fraction riche en matières plastiques (KF1) avec une granulométrie d'environ 0 à 1,7 mm, une fraction riche en matières plastiques (KF2) avec une granulométrie d'environ 1,3 mm à 4,2 mm et une fraction riche en matières plastiques (KF3) avec une granulométrie d'environ 3,8 mm à environ 7,2 mm.

4. Procédé selon l'une quelconque des revendications 1 à 3, **caractérisé en ce que** la fraction lourde riche en matières plastiques (SF) présente en moyenne un poids en vrac de > 0,2 t/m³.

5. Procédé selon l'une quelconque des revendications 1 à 4, **caractérisé en ce que** l'on effectue la séparation des parties métalliques en deux étapes (VG1, VG2), dans lequel dans la première étape (VG1) on effectue une séparation de constituants ferromagnétiques (FE) et dans la deuxième étape (VG2) on effectue une séparation de parties métalliques non ferromagnétiques (NE, NES).

6. Procédé selon la revendication 5, **caractérisé en ce que** l'on effectue la séparation de parties métalliques non ferromagnétiques (NE, NES) par séparation en lit fluidisé (WA1) ou par séparation métallique sensitive (MS1) sur la base de la conductibilité électrique des parties métalliques (NE, NES).

7. Procédé selon l'une quelconque des revendications 1 à 6, **caractérisé en ce que** l'on effectue une séparation de PVC riche en chlore au moyen de la capacité d'absorption différente de rayonnement X après la séparation de parties métalliques (FE, NE, NES).

8. Procédé selon l'une quelconque des revendications 1 à 7, **caractérisé en ce que** l'on effectue le broyage (VG4) de la fraction riche en matières plastiques restante jusqu'à une granulométrie inférieure ou égale à 8 mm.

9. Procédé selon la revendication 8, **caractérisé en ce que** l'on effectue le broyage (VG4) de la fraction riche en matières plastiques restante de telle manière qu'il se produise une désagrégation des métaux non désagrégés de > 95 %.

10. Procédé selon l'une quelconque des revendications 1 à 9, **caractérisé en ce qu'**une étape de procédé (VG5) pour la séparation de fractions volantes brutes et/ou de particules de bois suit le broyage (VG4).

11. Procédé selon l'une quelconque des revendications 1 à 10, **caractérisé en ce que** l'on effectue la division (VG6) de la fraction riche en matières plastiques restante en des fractions riches en matières plastiques (KF1 à KF3) par criblage (SE3).

12. Procédé selon l'une quelconque des revendications 1 à 11, **caractérisé en ce que** l'on soumet les fractions riches en matières plastiques (KF1 à KF3) indépendamment l'une de l'autre à une séparation de fractions volantes brutes et/ou de particules de bois.

13. Procédé selon l'une quelconque des revendications 1 à 12, **caractérisé en ce que** l'on soumet la fraction riche en matières plastiques (KF1) avec une granulométrie de 0 à 1,7 mm à une séparation par densité (VG8), de telle manière qu'il apparaisse comme produit final une fraction métallique non ferromagnétique (NE) et un produit broyé de matières plastiques (KM).

14. Procédé selon la revendication 13, **caractérisé en ce que** le produit broyé de matières plastiques (KM) est une matière plastique pauvre en chlore avec une teneur en chlore < 1 %.

15. Procédé selon l'une quelconque des revendications 3 à 14, **caractérisé en ce que** l'on soumet la fraction riche en matières plastiques (KF2) avec une granulométrie de 1,3 mm à 4,2 mm à une séparation par densité (VG8) de telle manière qu'il apparaisse comme produit intermédiaire une fraction granulée prétraitée (GF1) et une fraction métallique non ferromagnétique (NE2).

16. Procédé selon la revendication 15, **caractérisé en ce que** l'on envoie la fraction métallique non ferromagnétique (NE2) à un processus partiel, dans lequel on soumet au moins une partie de la fraction métallique (NE2) à un autre processus de triage.

17. Procédé selon l'une quelconque des revendications 3 à 16, **caractérisé en ce que** l'on soumet la fraction riche en matières plastiques (KF3) avec une granulométrie de 3,8 mm à 7,2 mm à une séparation par densité (VG8), de telle manière qu'il apparaisse comme produit intermédiaire une fraction granulée prétraitée (GF2) et une fraction métallique non ferromagnétique (NE3).

18. Procédé selon une des revendications 15 à 17, **caractérisé en ce que** l'on envoie la fraction métallique non ferromagnétique (NE3) à un processus partiel, dans lequel on soumet au moins une partie de la fraction métallique (NE3) à un autre processus de triage, dans lequel on effectue le triage en même temps avec un courant partiel provenant de la fraction métallique ferromagnétique (NE2).

19. Procédé selon au moins une des revendications 16 à 18, **caractérisé en ce que** l'on envoie la fraction métallique non ferromagnétique (NE2) à un criblage avant le processus de triage.

20. Procédé selon au moins une des revendications 16 à 19, **caractérisé en ce que** l'on envoie les fractions métalliques non ferromagnétiques (NE2, NE3) à une séparation de constituants ferromagnétiques.

21. Procédé selon l'une quelconque des revendications 17 à 20, **caractérisé en ce que** l'on envoie la fraction granulée prétraitée (GF1) et la fraction granulée prétraitée (GF2) à un processus partiel, dans lequel on soumet celles-ci à un nettoyage de surface (VG10) afin d'enlever les poussières et/ou des liquides d'exploitation.

22. Procédé selon la revendication 21, **caractérisé en ce que** l'on exécute le nettoyage de surface (VG10) au moyen d'eau dans une centrifugeuse.

23. Procédé selon au moins une des revendications 17 à 22, **caractérisé en ce que** l'on effectue dans une étape de processus suivante (VG11) une division des fractions granulées (GF1, GF2) en une fraction granulée riche en PVC et une fraction granulée pauvre en PVC.

24. Procédé selon la revendication 23, **caractérisé en ce que** l'on effectue dans une étape de processus suivante (VG12) une division de la fraction granulée pauvre en PVC en une fraction granulée riche en polyoléfine et une fraction granulée pauvre en polyoléfine.

25. Procédé selon la revendication 24, **caractérisé en ce que** dans une étape de processus suivante (VG13) on effectue une séparation du caoutchouc de la fraction granulée riche en polyoléfine.

26. Procédé selon au moins une des revendications 24 et 25, **caractérisé en ce que** dans une autre étape de processus on effectue une séparation du caoutchouc de la fraction granulée riche en PVC.

27. Procédé selon au moins une des revendications 1 à 26, **caractérisé en ce que** les déchets riches en matières plastiques pauvres en métaux (KA) sont au moins en partie des résidus de broyage de déchets contenant des métaux.

28. Procédé selon au moins une des revendications 1 à 27, **caractérisé en ce que** les déchets riches en matières plastiques pauvres en métaux (KA) sont au moins en partie des déchets riches en matières plastiques pauvres en métaux, qui ont été produits au moins en partie dans des processus de déchiquetage de véhicules.

29. Installation pour préparer une fraction lourde, riche en matières plastiques (SF), qui a été obtenue lors de la préparation de mélanges de substances riches en matière plastiques et pauvres en métaux (KA), **caractérisée en ce qu'**elle comprend des moyens (MA2, WA1, MS1, ZA1, SE3, DT1 à DT3, P1, OR1, NT1, NT2, ET, KM, SO1), avec lesquels les étapes de procédé successives suivantes peuvent être exécutées:
- séparer (VG1, VG2) des parties métalliques (FE, NES, NE) de la fraction lourde riche en matières plastiques,
- broyer (VG4) la fraction lourde riche en matières plastiques (KFA) appauvrie en métaux restant après la séparation des parties métalliques,
- diviser (VG6) la fraction lourde riche en matières plastiques (KFA), appauvrie en métaux restant après la séparation des parties métalliques en fractions riches en matières plastiques (KF1 à KF3) de granulométrie différente,
- préparer (VG8 - VG13) les fractions séparées riches en matière plastiques (KF1 à KF3) au moins en partie dans des processus différents,
dans laquelle il est prévu des moyens (SE3) au moyen desquels la fraction riche en matières plastiques (KFA) peut être divisée en une fraction riche en matières plastiques (KF1) avec une granulométrie d'environ 0 à 1,7 mm, une fraction riche en matières plastiques (KF2) avec une granulométrie d'environ 1,3 mm à 4,2 mm et une fraction riche en matières plastiques (KF3) avec une granulométrie d'environ 3,8 mm à environ 7,2 mm.

30. Installation selon la revendication 29, **caractérisée en ce que** la fraction lourde riche en matières plastiques (SF) présente en moyenne un poids en vrac de > 0,2 t/m³.

31. Installation selon la revendication 29 ou 30, **caractérisée en ce qu'**il est prévu des moyens (MA2) pour séparer des constituants ferromagnétiques (FE) dans l'étape de processus (VG1).

32. Installation selon la revendication 31, **caractérisée en ce que** des moyens pour séparer des parties métalliques non ferromagnétiques (NE, NES) sont montés après les moyens (MA2) pour séparer des constituants ferromagnétiques (FE).

33. Installation selon au moins une des revendications 29 à 32, **caractérisée en ce que** des moyens pour séparer du PVC riche en chlore sont montés après les moyens pour séparer des parties métalliques (FE, NE, NES) .

34. Installation selon au moins une des revendications 29 à 33, **caractérisée en ce que** les moyens (ZA1) pour broyer (VG4) la fraction riche en matières plastiques obtenue (KFA) sont configurés de telle manière qu'une désagrégation de métaux non désagrégés puisse être réalisée à > 95 %.

35. Installation selon au moins une des revendications 29 à 34, **caractérisée en ce que** les moyens (ZA1) pour broyer (VG4) la fraction riche en matières plastiques obtenue (KFA) sont configurés de telle manière qu'il se produise un broyage de la fraction riche en matières plastiques obtenue (KFA) à une granulométrie inférieure ou égale à 8 mm.

36. Installation selon au moins une des revendications 29 à 35, **caractérisée en ce qu'**il est prévu des moyens (WS1) pour séparer une fraction volante brute et/ou des particules de bois après les moyens (ZA1) pour broyer la fraction riche en matières plastiques.

37. Installation selon au moins une des revendications 29 à 36, **caractérisée en ce que** les moyens (SE3) pour diviser la fraction riche en matières plastiques restante (KFA) sont un dispositif de criblage avec au moins trois étages de criblage avec une grandeur de trous différente.

38. Installation selon au moins une des revendications 29 à 37, **caractérisée en ce que** des moyens (WS2) pour séparer séparément les fractions volantes brutes et/ou les particules de bois des fractions riches en matières plastiques (KF1 à KF3) obtenues après la division de la fraction riche en matières plastiques (KFA) sont disposés après les moyens (SE3) pour diviser la fraction riche en matières plastiques restante (KFA).

39. Installation selon au moins une des revendications 29 à 38, **caractérisée en ce que** des moyens (DT1) pour la séparation par densité de la fraction riche en matières plastiques (KF1) sont montés après les moyens (SE3) pour diviser les fractions riches en matières plastiques (KFA), et sont configurés de telle manière que l'on obtienne après la séparation par densité un produit broyé de matières plastiques (KM) et une fraction métallique non ferromagnétique (NE).

40. Installation selon au moins une des revendications 29 à 39, **caractérisée en ce que** des moyens (DT2) pour la séparation par densité de la fraction riche en matières plastiques obtenue (KF2) sont disposés après les moyens (SE3) pour diviser la fraction riche en matières plastiques (KFA), et sont configurés de telle manière que l'on obtienne après la séparation par densité une fraction granulée (GF1) et une fraction métallique non ferromagnétique (NE2).

41. Installation selon au moins une des revendications 29 à 40, **caractérisée en ce que** des moyens (DT3) pour la séparation par densité de la fraction riche en matières plastiques obtenue (KF3) sont montés après les moyens (SE3) pour diviser la fraction riche en matières plastiques (KFA), et sont configurés de telle manière que l'on obtienne après la séparation par densité une fraction granulée (GF2) et une fraction métallique non ferromagnétique (NE3).

42. Installation selon une revendication 40 et 41, **caractérisée en ce qu'**il est prévu dans un processus partiel des moyens (SO1), par lesquels au moins une partie des fractions métalliques non ferromagnétiques (NE2, NE3) est soumise à un autre processus de triage.

43. Installation selon la revendication 40, **caractérisée en ce qu'**elle présente dans le processus partiel des moyens pour le criblage de la fraction métallique non ferromagnétique (NE2).

44. Installation selon une revendication 40 et 41, **caractérisée en ce qu'**il est prévu dans un processus partiel des moyens (OR1) pour le nettoyage de surface de fractions granulées (GF1) et/ou (GF2) des poussières et/ou des liquides d'exploitation.

45. Installation selon la revendication 44, **caractérisée en ce que** des moyens (NT1) pour une première séparation humide par densité sont montés après les moyens (OR1) pour le nettoyage de surface des fractions granulées (GF1) et (GF2), et dans lesquels on effectue une division des fractions granulées (GF1, GF2) en une fraction granulée riche en PVC et une fraction granulée pauvre en PVC.

46. Installation selon la revendication 45, **caractérisée en ce que** des moyens (NT2) pour une seconde séparation humide par densité sont disposés après les moyens (NT1) de la première séparation humide par densité, et dans lesquels on effectue une division de la fraction granulée pauvre en PVC en une fraction granulée riche en polyoléfine et une fraction granulée pauvre en oléfine.

47. Installation selon une revendication 45 et 46, **caractérisée en ce que** des moyens (ET1 ou ET2) pour la séparation de caoutchouc sont disposés après les moyens (NT1 ou NT2) pour la séparation humide par densité.
